# EUROPÄISCHE PATENTSCHRIFT

(11) **EP 3 505 828 B1**
(45) Veröffentlichungstag und Bekanntmachung des Hinweises auf die Patenterteilung: **10.03.2021**
(21) Anmeldenummer: 18150086.9
(22) Anmeldetag: 02.01.2018
(51) Int. Cl.: F24C 7/08

(54) **ENCODERDREHKNOPF FÜR EINEN MAGNETISCHEN ENCODER**
ENCODER ROTARY KNOB FOR A MAGNETIC ENCODER
BOUTON ROTATIF DU CODEUR POUR UN CODEUR MAGNÉTIQUE

(43) Veröffentlichungstag der Anmeldung: 03.07.2019
(73) Patentinhaber: ddm hopt + schuler GmbH & Co. KG., 78628 Rottweil (DE)
(72) Erfinder: STEINMANN, Jan, 78052 Villingen (DE)
(74) Vertreter: Kohler Schmid Möbus Patentanwälte

(56) Entgegenhaltungen:
- EP-A1- 2 821 709
- EP-A2- 1 901 005
- WO-A2-2010/084061
- DE-A1- 10 255 676
- DE-A1-102009 049 005
- DE-A1-102013 208 640
- DE-B3- 10 353 181

## Beschreibung

Die vorliegende Erfindung betrifft einen Encoderdrehknopf für einen magnetischen Encoder, aufweisend einen Stator zum Aufsetzen auf die Oberseite einer Platte aus nichtmagnetischem Material, insbesondere aus Glas, Glaskeramik oder Edelstahl, mit mindestens einem Haftmagneten, einen auf dem Stator um eine Drehachse drehbar gelagerten Rotor mit einem mit einem Hallsensor des magnetischen Encoders zusammenwirkenden Magneten und eine zwischen dem Stator und dem Rotor wirkende Rasteinrichtung, welche diskrete Drehstellungen des Rotors vorgibt, sowie auch einen magnetischen Encoder mit einem solchen Encoderdrehknopf und eine Bedienvorrichtung mit einem solchen magnetischen Encoder.

Ein derartiger Encoderdrehknopf für magnetische Encoder ist beispielsweise durch die DE 102 55 676 A1 bekannt geworden. Der Stator dieses bekannten Encoderdrehknopfs ist mittels Magnetkraft an einer Bedienfläche gehalten, indem Haltemagnete an der Knopfunterseite mit Magneten unter der Bedienfläche zusammenwirken. Die diskreten Drehstellungen des Rotors sind über eine zwischen Stator und Rotor wirkende Rastung mit zwei federbelasteten Kugeln gebildet, die in eine Vielzahl von Rastmulden des Rotors einrastbar sind. Allerdings können die Kugeln auch zwischen zwei Rastmulden, also in Zwischenrastpositionen, stehen bleiben, was zu fehlerhaften Drehstellungen des Rotors führt.

Aus der DE 10 2013 208 640 A1 ist weiterhin ein Encoderdrehknopf mit einem Magnetdrehrastschalter bekannt, welcher durch einen Magneten im Oberteil und durch magnetisierbare Blechstücke im Unterteil gebildet ist. Aufgrund der magnetischen Anziehungskraft zwischen einem Blechstück und dem Magneten ist ein fühlbarer Widerstand zu überwinden, wenn das Oberteil gegenüber dem Unterteil verdreht werden soll. Die EP 1 901 005 A2 zeigt einen weiteren bekannten Encoderdrehknopf mit einer magnetischen Rastvorrichtung.

Aus der DE 10 2011 002 410 A1 ist schließlich eine mechanische Rastvorrichtung bekannt, die einen umlaufenden Vorsprung an der Unterseite des Drehknebels und an der Oberseite eine Rastkulisse mit Raststegen aufweist, an der der umlaufende Vorsprung bei einer Drehbewegung des Drehknebels entlangläuft. Aus der DE 10 2009 049005 A1 und der DE 103 53 181 B3 sind magnetische Rastvorrichtungen bekannt.

Demgegenüber ist es die Aufgabe der vorliegenden Erfindung, bei einem Encoderdrehknopf der eingangs genannten Art eine alternative Rasteinrichtung anzugeben, die sicher verhindert, dass der Rotor in Zwischenrastpositionen gelangen kann.

Diese Aufgabe wird erfindungsgemäß dadurch gelöst, dass die Rasteinrichtung durch zwei ineinander und koaxial zur Drehachse angeordnete Ringe gebildet ist, von denen einer am Stator und der andere am Rotor angeordnet ist, und dass einer der beiden Ringe als ein segmentierter Magnetring mit mehreren Magnetringsegmenten, welche mit abwechselnder radialer Polung in äquidistanten Winkelabständen angeordnet sind, und der andere Ring als ein Zahnring aus ferromagnetischem Material mit mehreren Zähnen, welche in äquidistanten Winkelabständen angeordnet sind, gebildet ist.

Dabei sind die Magnetringsegmente durch radial polarisierte magnetische Dipole gebildet, die in Umfangsrichtung mit jeweils alternierender Polarität nebeneinander angeordnet sind. Der Zahnring kann beispielswiese ein Stanzteil aus Blech sein und weist vorteilhaft eine der Anzahl der Magnetringsegmente entsprechende Anzahl an Zähnen auf.

Vorzugsweise ist der mit dem Hallsensor des magnetischen Encoders zusammenwirkende Magnet bezüglich der Drehachse diametral magnetisiert, also z.B. seine eine radiale Hälfte als Nordpol und seine andere Hälfte als Südpol magnetisiert.

Der mindestens eine Haftmagnet kann vorteilhaft als ein koaxial zur Drehachse angeordneter Ringmagnet ausgebildet oder aber durch mehrere, insbesondere drehsymmetrisch um die Drehachse herum angeordnete Einzelmagnete gebildet sein.

Weiterhin kann der Rotor mit einer Push-Schaltfunktion ausgestattet sein, indem der Rotor gegen die Wirkung einer Rückstellkraft, insbesondere einer Rückstellfeder (z.B. Schnappscheibe), auf dem Stator verschiebbar geführt ist. Die Signalauswertung der Push-Funktion erfolgt dann über den Hallsensor der Sensoreinheit unter der Platte. Statt der Schnappscheibe kann die Rückstellkraft auch magnetisch durch einander abstoßende Magnete am Stator und am Rotor verwirklicht sein.

Zur Personalisierung des magnetischen Encoders kann der Stator optional einen RFID-Tag aufweisen. Weiterhin kann, insbesondere im Stator, eine Lichtquelle (z.B. LED) zur Beleuchtung des Encoderdrehknopfs angeordnet sein.

Die Erfindung betrifft weiterhin einen magnetischen Encoder mit einem wie oben ausgebildeten Encoderdrehknopf und mit einer an der Unterseite der Platte befestigbaren Hallsensoreinheit, die einen Hallsensor und ein mit dem mindestens einen Haftmagneten des Encoderdrehknopfs magnetisch zusammenwirkendes Gegenlager aufweist, welches den Hallsensor insbesondere zentrisch umgibt.

Das Gegenlager kann aus ferromagnetischem Material gebildet oder durch mindestens einen Magneten, insbesondere einen Ringmagneten, ausgebildet sein.

Die Erfindung betrifft schließlich auch eine Bedienvorrichtung, beispielsweise zur Temperatureinstellung an Kochglasfeldern, mit einer Platte aus nichtmagnetischem Material, insbesondere aus Glas, Glaskeramik oder Edelstahl, und mit einem wie oben ausgebildeten magnetischen Encoder, wobei der Encoderdrehknopf mit seinem Stator auf die Oberseite der Platte aufgesetzt und die Hallsensoreinheit an der Unterseite der Platte befestigt ist und wobei das mit dem mindestens einen Haftmagneten magnetisch zusammenwirkende Gegenlager den Stator an der Platte sowohl zentriert zum Gegenlager als auch unverdrehbar hält. Der Encoderdrehknopf wird als Schaltsystem an einer geschlossenen Platte oder Gerätefront platziert, ohne dass Bohrungen in der Platte oder Frontblende benötigt werden.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Bedienvorrichtung mit einem magnetischen Encoder; und
- Fig. 2: einen Längsschnitt eines Encoderdrehknopfs des magnetischen Encoders; und
- Fig. 3: eine magnetische Drehrastung des Encoderdrehknopfs.

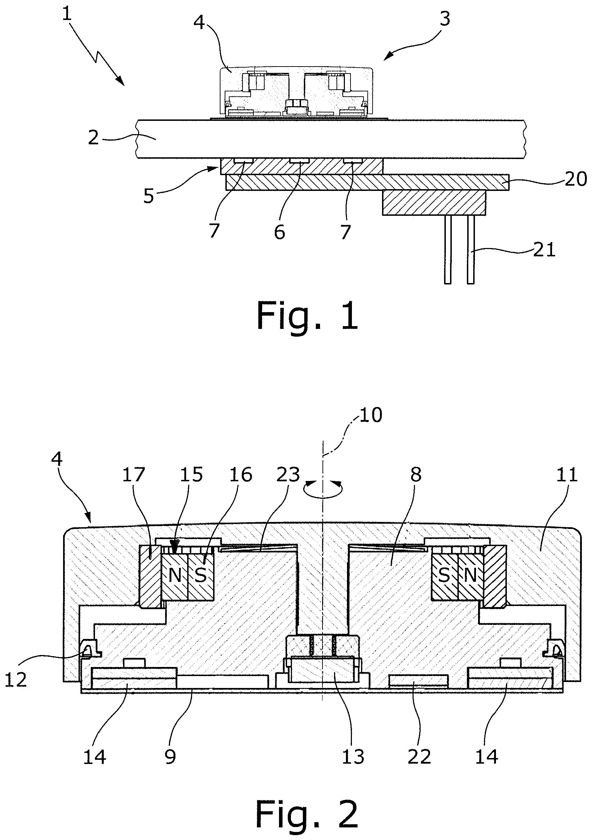

Die in **Fig. 1** gezeigte Bedienvorrichtung **1** dient beispielsweise zur Temperatureinstellung an Kochglasfeldern und umfasst eine Platte **2** aus nichtmagnetischem Material wie Glas, Glaskeramik oder Edelstahl und einen magnetischen Encoder **3** mit einem Encoderdrehknopf **4** und mit einer Sensoreinheit **5.** Der Encoderdrehknopf 4 ist auf die Plattenoberseite aufgesetzt und die Sensoreinheit 5 an der Plattenunterseite ortsfest befestigt, z.B. angeklebt. Die Sensoreinheit 5 weist einen Hallsensor **6** sowie ein den Hallsensor 6 zentrisch umgebendes, magnetisch anziehbares Gegenlager **7** in Form eines Ringmagneten oder mehrerer Einzelmagnete oder alternativ in Form eines Rings oder mehrerer Einzelelemente aus ferromagnetischem Material auf.

Wie in **Fig. 2** gezeigt, umfasst der Encoderdrehknopf 4 einen Stator **8** mit einer dünnen, ebenen Bodenplatte **9** zum flachen Aufsetzen auf die Oberseite der Platte 2 und einen auf dem Stator 8 um eine Drehachse **10** drehbar gelagerten Rotor **11** (z.B. aus Edelstahl), welcher den Stator 8 oben und seitlich abdeckt. Über einen Dichtungsring **12** sind der Stator 8 und der Rotor 11 gegeneinander abgedichtet. Der Rotor 11 weist nahe der Bodenplatte 9 einen zentrisch angeordneten diametral magnetisierten Magneten **13** und der Stator 8 einen ringförmigen Haftmagneten **14** auf, welcher den Magneten 13 zentrisch umgibt und an der Bodenplatte 9 anliegt. Diametral magnetisiert heißt, dass zwei bezüglich der Drehachse 10 einander gegenüberliege Seiten des Magneten 13 als Nordpol und als Südpol magnetisiert sind. Alternativ kann der Haftmagnet 14 auch durch mehrere, insbesondere drehsymmetrisch, um die Drehachse 10 herum angeordnete Einzelmagnete gebildet sein. Durch eine magnetische Drehrastung **15** in Form eines inneren, segmentierten Magnetrings **16** am Stator 8 und eines äußeren Zahnrings **17** aus ferromagnetischem Material am Rotor 11 sind diskrete Dreh- bzw. Raststellungen des Rotors 11 vorgegeben.

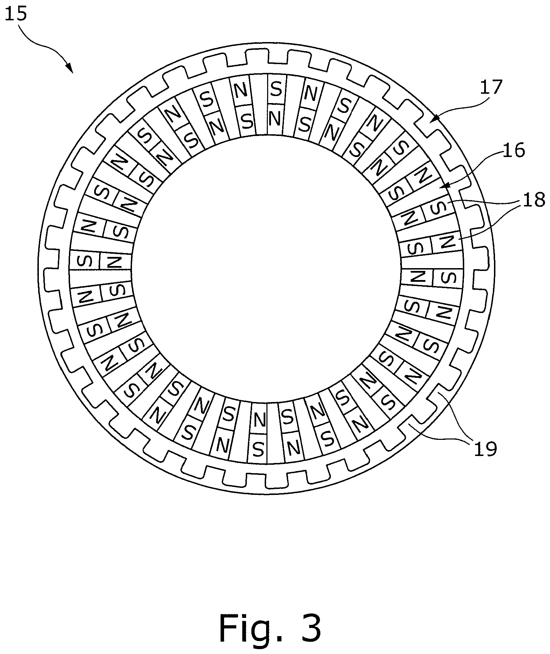

Wie in **Fig. 3** genauer gezeigt, besteht der segmentierte Magnetring 16 aus mehreren, hier beispielhaft 32, radial ausgerichteten Magnetringsegmenten in Form von radial polarisierten magnetischen Dipolen **18,** die in Umfangsrichtung mit jeweils alternierender Polarität nebeneinander angeordnet sind. Der Zahnring 17 weist eine der Anzahl der Dipole 18 entsprechende Anzahl an Innenzähnen **19** auf. Die Dipole 18 wirken mit ihrem jeweils radial äußeren Magnetpol mit den Innenzähnen 19 zusammen, um so den Rotor 11 in insgesamt 32 Drehstellungen lösbar im Stator 8 zu verrasten. Durch die magnetische Drehrastung 15 werden mit bestimmten Drehwinkeln abgestufte und bei einer Drehbewegung spürbare, aber dennoch leicht überwindbare Widerstände gebildet.

Durch das Zusammenwirken des Haftmagneten 14 mit dem Gegenlager 7 der Sensoreinheit 5 zentriert sich der Encoderdrehknopf 4 beim Aufsetzen auf die Oberseite der Platte 2 selbst bezüglich des Hallsensors 6 und wird anschließend in drehfester Anlage an der Oberseite der Platte 2 gehalten. Die Platte 2 wird also nicht durchbohrt, und die Haftung des Encoderdrehknopfs 4 an der Platte 2 erfolgt ausschließlich über die magnetische Anziehung zwischen dem Haftmagneten 14 und dem Gegenlager 7 der Sensoreinheit 5. Anhand des diametral magnetisierten Magneten 13 kann die jeweilige Ist-Drehstellung des Rotors 11 vom Hallsensor 6 erfasst werden. In Fig. 1 ist noch die Anschlussplatine **20** der Sensoreinheit 5 mit ihren Anschlussstiften **21** gezeigt.

Zur Personalisierung des Encoderdrehknopfs 4 kann der Stator 8 optional einen RFID-Tag **22** aufweisen. Weiterhin kann der Rotor 11 mit einer Push-Funktion ausgestattet sein, indem der Rotor 11 gegen die mechanische Rückstellkraft einer Schnappscheibe **23** auf dem Stator 8 axial in Richtung Bodenplatte 9 verschiebbar geführt ist. Die Signalauswertung der Push-Funktion erfolgt über den Hall-Sensor 6 unter der Platte 2. Statt mechanisch kann die axiale Rückstellkraft auch magnetisch durch einander abstoßende Magnete am Stator 8 und am Rotor 11 verwirklicht sein. Zusätzlich kann im Encoderdrehknopf 4, insbesondere im Stator 8, noch eine Lichtquelle (LED) zur Beleuchtung des Encoderdrehknopfs 4 angeordnet sein.

## Patentansprüche

1. Encoderdrehknopf (4) für einen magnetischen Encoder (3), aufweisend
einen Stator (8) zum Aufsetzen auf die Oberseite einer Platte (2) aus nichtmagnetischem Material, insbesondere aus Glas, Glaskeramik oder Edelstahl, mit mindestens einem Haftmagneten (14),
einen auf dem Stator (8) um eine Drehachse (10) drehbar gelagerten Rotor (11) mit einem mit einem Hallsensor (6) des magnetischen Encoders (3) zusammenwirkenden Magneten (13), und
eine zwischen dem Stator (8) und dem Rotor (11) wirkende Rasteinrichtung (15), welche diskrete Drehstellungen des Rotors (11) vorgibt,
**dadurch gekennzeichnet,**
**dass** die Rasteinrichtung (15) durch zwei ineinander und koaxial zur Drehachse (10) angeordnete Ringe gebildet ist, von denen einer am Stator (8) und der andere am Rotor (11) angeordnet ist, und
**dass** einer der beiden Ringe als ein segmentierter Magnetring (16) mit mehreren Magnetringsegmenten (18), welche mit abwechselnder radialer Polung in äquidistanten Winkelabständen angeordnet sind, und der andere Ring als ein Zahnring (17) aus ferromagnetischem Material mit mehreren Zähnen (19), welche in äquidistanten Winkelabständen angeordnet sind, gebildet ist, wobei die Magnetringsegmente durch radial polarisierte magnetische Dipole (18) gebildet sind, die in Umfangsrichtung mit jeweils alternierender Polarität nebeneinander angeordnet sind.

2. Encoderdrehknopf nach Anspruch 1, **dadurch gekennzeichnet, dass** der segmentierte Magnetring (16) am Rotor (11) und der Zahnring (17) am Stator (8) angeordnet ist.

3. Encoderdrehknopf nach Anspruch 1 oder 2, **dadurch gekennzeichnet, dass** der segmentierte Magnetring (16) den inneren Ring und der Zahnring (17) den

4. Encoderdrehknopf nach einem der vorhergehenden Ansprüche, **dadurch gekennzeichnet, dass** der Zahnring (17) eine der Anzahl der Magnetringsegmente (18) entsprechende Anzahl an Zähnen (19) aufweist.

5. Encoderdrehknopf nach einem der vorhergehenden Ansprüche, **dadurch gekennzeichnet, dass** der mit dem Hallsensor (6) des magnetischen Encoders (3) zusammenwirkende Magnet (13) bezüglich der Drehachse (10) diametral magnetisiert ist.

6. Encoderdrehknopf nach einem der vorhergehenden Ansprüche, **dadurch gekennzeichnet, dass** der mindestens eine Haftmagnet (14) im Boden des Stators (8) angeordnet ist.

7. Encoderdrehknopf nach einem der vorhergehenden Ansprüche, **dadurch gekennzeichnet, dass** der mindestens eine Haftmagnet (14) als ein koaxial zur Drehachse (10) angeordneter Ringmagnet ausgebildet oder durch mehrere, insbesondere drehsymmetrisch um die Drehachse (10) herum, angeordnete Einzelmagnete gebildet ist.

8. Encoderdrehknopf nach einem der vorhergehenden Ansprüche, **dadurch gekennzeichnet, dass** der Rotor (11) gegen die Wirkung einer Rückstellkraft, insbesondere einer Schnappscheibe (23), auf dem Stator (8) axial verschiebbar geführt ist.

9. Encoderdrehknopf nach einem der vorhergehenden Ansprüche, **dadurch gekennzeichnet, dass** der Stator (8) einen RFID-Tag (22) aufweist.

10. Encoderdrehknopf nach einem der vorhergehenden Ansprüche, **gekennzeichnet durch** eine, insbesondere im Stator (8), angeordnete Lichtquelle zur Beleuchtung des Encoderdrehknopfs (4).

11. Magnetischer Encoder (3) mit einem Encoderdrehknopf (4) nach einem der vorhergehenden Ansprüche und mit einer an der Unterseite der Platte (2) befestigbaren Hallsensoreinheit (5), die einen Hallsensor (6) und ein mit dem mindestens einen Haftmagneten (14) des Encoderdrehknopfs (4) magnetisch zusammenwirkendes Gegenlager (7) aufweist, welches den Hallsensor (6) insbesondere zentrisch umgibt.

12. Magnetischer Encoder nach Anspruch 11, **dadurch gekennzeichnet, dass** das Gegenlager (7) aus ferromagnetischem Material gebildet oder durch mindestens einen Magneten ausgebildet ist.

13. Bedienvorrichtung (1) mit einer Platte (2) aus nichtmagnetischem Material, insbesondere aus Glas, Glaskeramik oder Edelstahl, und mit einem magnetischen Encoder (3) nach Anspruch 11 oder 12, wobei der Encoderdrehknopf (4) mit seinem Stator (8) auf die Oberseite der Platte (2) aufgesetzt und die Hallsensoreinheit (5) an der Unterseite der Platte (2) befestigt ist und wobei das mit dem mindestens einen Haftmagneten (14) magnetisch zusammenwirkende Gegenlager (7) den Stator (8) an der Platte (2) sowohl zentriert zum Gegenlager (7) als auch unverdrehbar hält.

## Claims

1. Encoder rotary knob (4) for a magnetic encoder (3), comprising:
a stator (8) for fitting onto the upper side of a plate (2) made of nonmagnetic material, in particular of glass, glass ceramic or stainless steel, having at least one holding magnet (14),
a rotor (11) which is mounted on the stator (8) so as to be capable of rotating about a rotational axis (10) and has a magnet (13) which interacts with a Hall sensor (6) of the magnetic encoder (3), and
a latching device (15) which acts between the stator (8) and the rotor (11) and predefines discrete rotational positions of the rotor (11),
**characterized**
**in that** the latching device (15) is formed by two rings which are arranged one in the other and coaxially with respect to the rotational axis (10), one ring of which is arranged on the stator (8) and the other on the rotor (11), and
**in that** one of the two rings is formed as a segmented magnetic ring (16) with a plurality of magnetic ring segments (18) which are arranged with alternating radial polarity at equidistant angular intervals, and the other ring is formed as a toothed ring (17) made of ferromagnetic material with a plurality of teeth (19) which are arranged at equidistant angular intervals, wherein the magnetic ring segments are formed by radially polarized magnetic dipoles (18) which are arranged one next to the other with respectively alternating polarity in the circumferential direction.

2. Encoder rotary knob according to claim 1, **characterized in that** the segmented magnetic ring (16) is arranged on the rotor (11), and the toothed ring (17) is arranged on the stator (8).

3. Encoder rotary knob according to claim 1 or 2, **characterized in that** the segmented magnetic ring (16) forms the inner ring, and the toothed ring (17) forms the outer ring.

4. Encoder rotary knob according to one of the preceding claims, **characterized in that** the toothed ring (17) has a number of teeth (19) corresponding to the number of magnetic ring segments (18).

5. Encoder rotary knob according to one of the preceding claims, **characterized in that** the magnet (13) which interacts with the Hall sensor (6) of the magnetic encoder (3) is magnetized diametrically with respect to the rotational axis (10).

6. Encoder rotary knob according to one of the preceding claims, **characterized in that** the at least one holding magnet (14) is arranged in the base of the stator (8).

7. Encoder rotary knob according to one of the preceding claims, **characterized in that** the at least one holding magnet (14) is embodied as an annular magnet which is arranged coaxially with respect to the rotational axis (10), or is formed by a plurality of individual magnets which are arranged in particular in a rotationally symmetrical fashion about the rotational axis (10).

8. Encoder rotary knob according to one of the preceding claims, **characterized in that** the rotor (11) is guided in an axially displaceable fashion on the stator (8) counter to the effect of a restoring force, in particular of a snap-action disc (23).

9. Encoder rotary knob according to one of the preceding claims, **characterized in that** the stator (8) has an RFID tag (22).

10. Encoder rotary knob according to one of the preceding claims, **characterized by** a light source which is arranged, in particular, in the stator (8) and has the purpose of illuminating the encoder rotary knob (4).

11. Magnetic encoder (3) with an encoder rotary knob (4) according to one of the preceding claims, and with a Hall sensor unit (5) which can be fastened to the underside of the plate (2) and has a Hall sensor (6) and a counter bearing (7) which interacts magnetically with the at least one holding magnet (14) of the encoder rotary knob (4) and surrounds the Hall sensor (6), in particular centrally.

12. Magnetic encoder according to claim 11, **characterized in that** the counter bearing (7) is formed from ferromagnetic material or is embodied by means of at least one magnet.

13. Control device (1) with a plate (2) made of nonmagnetic material, in particular of glass, glass ceramic or stainless steel, and with a magnetic encoder (3) according to claim 11 or 12, wherein the encoder rotary knob (4) is fitted with its stator (8) onto the upper side of the plate (2), and the Hall sensor unit (5) is fastened to the underside of the plate (2), and wherein the counter bearing (7) which interacts magnetically with the at least one holding magnet (14) holds the stator (8) on the plate (2) both in a centred fashion with respect to the counter bearing (7) and also non-rotatably.

## Revendications

1. Bouton rotatif de codeur (4) pour un codeur magnétique (3), présentant un stator (8) destiné à être placé sur la face supérieure d'une plaque (2) en matériau non magnétique, en particulier en verre, en vitrocéramique ou en acier inoxydable, avec au moins un aimant de retenue (14),
un rotor (11) monté sur le stator (8) de manière à pouvoir tourner autour d'un axe de rotation (10) et comportant un aimant (13) qui coopère avec un capteur à effet Hall (6) du codeur magnétique (3), et
un dispositif d'encliquetage (15) qui agit entre le stator (8) et le rotor (11) et qui prescrit des positions de rotation discrètes du rotor (11),
**caractérisé en ce**
**que** le dispositif d'encliquetage (15) est formé par deux anneaux disposés l'un dans l'autre et coaxialement à l'axe de rotation (10), dont l'un est disposé sur le stator (8) et l'autre sur le rotor (11), et
**que** l'un des deux anneaux est formé comme un anneau magnétique segmenté (16) avec plusieurs segments d'anneau magnétique (18) qui sont disposés avec une polarité radiale alternée à intervalles angulaires équidistants, et l'autre anneau est formé comme un anneau denté (17) en matériau ferromagnétique avec plusieurs dents (19) disposées à intervalles angulaires équidistants, les segments d'anneau magnétique étant formés par des dipôles magnétiques polarisés radialement (18) qui sont disposés côte à côte dans la direction circonférentielle avec une polarité alternée.

2. Bouton rotatif de codeur selon la revendication 1, **caractérisé en ce que** l'anneau magnétique segmenté (16) est disposé sur le rotor (11) et l'anneau denté (17) sur le stator (8).

3. Bouton rotatif de codeur selon la revendication 1 ou 2, **caractérisé en ce que** l'anneau magnétique segmenté (16) forme l'anneau intérieur et l'anneau denté (17) forme l'anneau extérieur.

4. Bouton rotatif de codeur selon l'une des revendications précédentes, **caractérisé en ce que** l'anneau denté (17) présente un nombre de dents (19) correspondant au nombre de segments d'anneau magnétique (18).

5. Bouton rotatif de codeur selon l'une des revendications précédentes, **caractérisé en ce que** l'aimant (13) coopérant avec le capteur à effet Hall (6) du codeur magnétique (3) est magnétisé diamétralement par rapport à l'axe de rotation (10).

6. Bouton rotatif de codeur selon l'une des revendications précédentes, **caractérisé en ce que** ledit au moins un aimant de retenue (14) est disposé dans le fond du stator (8).

7. Bouton rotatif de codeur selon l'une des revendications précédentes, **caractérisé en ce que** ledit au moins un aimant de retenue (14) est réalisé sous la forme d'un aimant annulaire disposé coaxialement à l'axe de rotation (10) ou formé de plusieurs aimants individuels, en particulier disposés de manière symétrique en rotation autour de l'axe de rotation (10).

8. Bouton rotatif de codeur selon l'une des revendications précédentes, **caractérisé en ce que** le rotor (11) est guidé de manière à pouvoir coulisser axialement sur le stator (8) contre l'action d'une force de rappel, en particulier d'un disque à déclic (23).

9. Bouton rotatif de codeur selon l'une des revendications précédentes, **caractérisé en ce que** le stator (8) présente une étiquette RFID (22).

10. Bouton rotatif de codeur selon l'une des revendications précédentes, **caractérisé par** une source de lumière, disposée en particulier dans le stator (8), pour éclairer le bouton rotatif de codeur (4).

11. Codeur magnétique (3) doté d'un bouton rotatif de codeur (4) selon l'une des revendications précédentes et d'une unité de capteur à effet Hall (5) qui peut être fixée sur la face inférieure de la plaque (2) et qui présente un capteur à effet Hall (6) et un contre-palier (7) qui coopère magnétiquement avec ledit au moins un aimant de retenue (14) du bouton rotatif de codeur (4) et qui entoure en particulier de manière centrée le capteur à effet Hall (6).

12. Codeur magnétique selon la revendication 11, **caractérisé en ce que** le contre-palier (7) est formé d'un matériau ferromagnétique ou réalisé sous la forme d'au moins un aimant.

13. Dispositif de manœuvre (1) présentant une plaque (2) en matériau non magnétique, en particulier en verre, en vitrocéramique ou en acier inoxydable, et présentant un codeur magnétique (3) selon la revendication 11 ou 12, dans lequel le bouton rotatif de codeur (4) est placé avec son stator (8) sur la face supérieure de la plaque (2) et l'unité de capteur à effet Hall (5) est fixée sur la face inférieure de la plaque (2), et dans lequel le contre-palier (7) coopérant magnétiquement avec ledit au moins un aimant de retenue (14) maintient le stator (8) sur la plaque (2) à la fois centré par rapport au contre-palier (7) et de manière non rotative.
